# EUROPEAN PATENT SPECIFICATION

(11) **EP 2 564 643 B1**
(45) Date of publication and mention of the grant of the patent: **25.10.2017**
(21) Application number: 10716538.3
(22) Date of filing: 29.04.2010
(51) Int. Cl.: H04W 52/42, H04W 52/34, H04W 52/24

(54) **INTERFERENCE MANAGEMENT**
INTERFERENZMANAGEMENT
GESTION DES INTERFÉRENCES

(43) Date of publication of application: 06.03.2013
(73) Proprietor: Nokia Solutions and Networks Oy, 02610 Espoo (FI)
(72) Inventor: SZUFARSKA, Agnieszka, PL-80-299 Gdansk (PL); PEDERSEN, Klaus Ingemann, DK-9000 Aalborg (DK)
(74) Representative: Borgström, Markus
(86) International application number: PCT/EP2010/055783
(87) International publication number: WO 2011/134517

(56) References cited:
- US-A1- 2009 253 421
- ARULSELVAN N ET AL: "Distributed Power Control Mechanisms for HSDPA Femtocells", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-5, XP031474453, ISBN: 978-1-4244-2517-4
- MATTHEW ANDREWS ET AL: "Autonomous Spectrum Sharing for Mixed LTE Femto and Macro Cells Deployments", INFOCOM IEEE CONFERENCE ON COMPUTER COMMUNICATIONS WORKSHOPS , 2010, IEEE, PISCATAWAY, NJ, USA, 15 March 2010 (2010-03-15), pages 1-5, XP031677378, ISBN: 978-1-4244-6739-6

## Description

The present invention relates to managing interference in a system where access nodes share at least some frequency resources for wireless transmissions to and from communication devices. In one embodiment, it relates to managing interference in a heterogeneous system comprising a macro access node serving a relatively wide area and one or more femto access nodes serving respective smaller areas within the relatively wide area served by the macro access node.

A communication device can be understood as a device provided with appropriate communication and control capabilities for enabling use thereof for communication with others parties. The communication may comprise, for example, communication of voice, electronic mail (email), text messages, data, multimedia and so on. A communication device typically enables a user of the device to receive and transmit communication via a communication system and can thus be used for accessing various service applications.

A communication system is a facility which facilitates the communication between two or more entities such as the communication devices, network entities and other nodes. A communication system may be provided by one or more interconnect networks. One or more gateway nodes may be provided for interconnecting various networks of the system. For example, a gateway node is typically provided between an access network and other communication networks, for example a core network and/or a data network.

An appropriate access system allows the communication device to access to the wider communication system. An access to the wider communications system may be provided by means of a fixed line or wireless communication interface, or a combination of these. Communication systems providing wireless access typically enable at least some mobility for the users thereof. Examples of these include wireless communications systems where the access is provided by means of an arrangement of cellular access networks. Other examples of wireless access technologies include different wireless local area networks (WLANs) and satellite based communication systems.

A wireless access system typically operates in accordance with a wireless standard and/or with a set of specifications which set out what the various elements of the system are permitted to do and how that should be achieved. For example, the standard or specification may define if the user, or more precisely user equipment, is provided with a circuit switched bearer or a packet switched bearer, or both. Communication protocols and/or parameters which should be used for the connection are also typically defined. For example, the manner in which communication should be implemented between the user equipment and the elements of the networks and their functions and responsibilities are typically defined by a predefined communication protocol. Such protocols and or parameters further define the frequency spectrum to be used by which part of the communications system, the transmission power to be used etc.

In the cellular systems a network entity in the form of a base station provides a node for communication with mobile devices in one or more cells or sectors. It is noted that in certain systems a base station is called 'Node B'. Typically the operation of a base station apparatus and other apparatus of an access system required for the communication is controlled by a particular control entity. The control entity is typically interconnected with other control entities of the particular communication network. Examples of cellular access systems include GSM (Global System for Mobile) EDGE (Enhanced Data for GSM Evolution) Radio Access Networks (GERAN), Universal Terrestrial Radio Access Networks (UTRAN), and evolved Universal Terrestrial Radio Access Networks (EUTRAN).

A radio access network managed by an operator may be a heterogeneous network comprising a plurality of low power access nodes designed to provide data services to communication devices within a relatively small geographical area within a relatively wide geographical area served by a higher power access node, wherein the low power access nodes and the high power access node share at least some frequency resources.

Examples of higher power access nodes are macro access nodes such as cellular network base stations operating according to a Long Term Evolution - Advanced (LTE-A) standard (LTE-A eNBs). Examples of low power access nodes include Closed Subscriber Group (CSG) Home eNBs also operating according to a LTE-A standard (CSG-HeNBs).

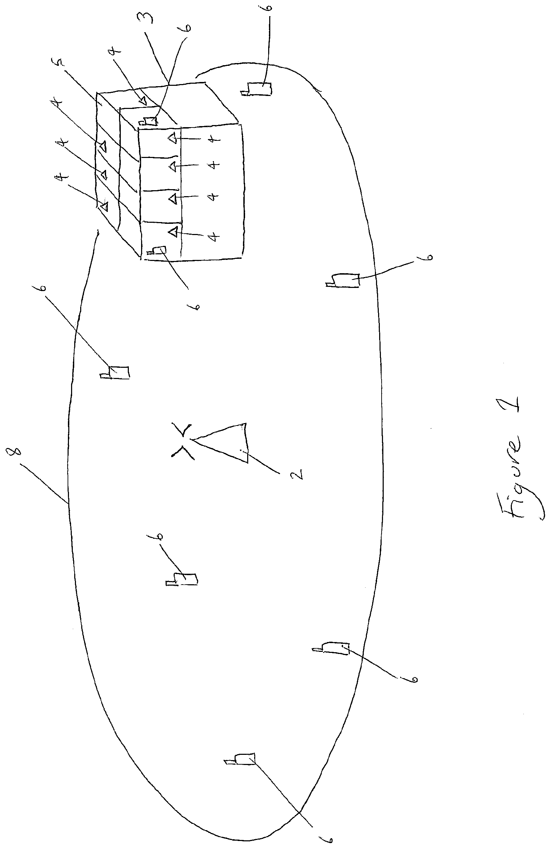

One simple example of such a heterogeneous network is illustrated in Figure 1. A LTE-A base station (eNB) 2 serves communication devices 6 within a relatively wide area 8. Within this area is an apartment building 3 in which a CSG HeNB 4 is provided in some or all of the apartments 5. The LTE-A base station 2 will typically be one of a large number of LTE-A base stations forming part of a cellular network. Likewise, the area served by each LTE-A base station will typically include a large number of CSG HeNBs. Figure 1 shows one floor of the apartment building with a respective CSG HeNB 4 in each of the eight apartments 5 situated on one floor of the apartment building. Because the LTE-A base station and the CSG HeNBs share frequency resources, there is a concern that transmissions made by such CSG HeNBs 4 at the edge of the area 8 served by the LTE-A base station 2 (where the received signal power from the LTE-A base station 2 is relatively weak) might make it difficult for the LTE-A base station 2 to serve a communication device located close to the CSG HeNBs. If this communication device is not a member of the CSG of the closest CSG HeNB and is therefore also not served by the closest CSG HeNB, then there is a risk that the communication device cannot be served by any access node.

As described in 3GPP Tdoc R1-1-1924, one technique for managing interference in this kind of situation is to allocate to LTE-A base station 2 some frequency resources that are not available to the CSG HeNBs 4. For example, the network might be configured such that the LTE-A base station 2 is able to use two different LTE-A component carriers F1 and F2 for its transmissions, whereas each CSG HeNBs 4 only uses one of these two carriers. Where a communication device served by LTE-A base station 2 is in the close vicinity of a CSG HeNB 4, the LTE-A base station 2 can avoid interference from that CSG HeNB's transmissions by communicating with that communication device using the one of the two carriers F1 and F2 that the CSG HeNB 4 does not use.

As described in 3GPP Tdoc R4-094245, another technique involves limiting the transmission power of CSG HeNBs 4 depending on their location in the area served by the LTE-A base station 2. For example, those CSG HeNBs located at the outer portion of the area served by the LTE-A base station 2 are subject to the strictest limitations on their transmission power, whereas CSG HeNBs located close to the LTE-A base station 2 are subject to the least limitations on their transmission power.

ARULSELVAN N ET AL: "Distributed Power Control Mechanisms for HSDPA Femtocells", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-5 describes a distributed power control mechanism for HSDPA femtocells.

US2009/253421 describes a technique of controlling at least one signal transmission characteristic of a femtocell based on analysed signal environment data.

It is an aim of the present invention to provide an improved technique for managing interference in a heterogeneous network.

The present invention provides a method according to claim 1.

The present invention also provides an apparatus according to claim 8.

The present invention also provides a computer program product according to claim 14.

The present invention also provides a system according to claim 15.

Hereunder an embodiment of the present invention will be described, by way of example only, with reference to the following drawings, in which:
Figure 1 illustrates a heterogeneous network within which an embodiment of the invention may be implemented, which network includes a LTE-A base station serving a relatively wide area and CSG-HeNBs serving respective smaller areas within the area served by the LTE-A base station.
Figure 2 illustrates a user equipment shown in figure 1 in further detail;
Figure 3 illustrates an apparatus suitable for implementing an embodiment of the invention at a CSG HeNB of the network shown in figure 1; and
Figure 4 illustrates a method of operating a CSG HeNB in Figure 1 in accordance with an embodiment of the present invention.

Figure 1 is described above. A LTE-A network has been chosen to describe an embodiment of the invention; but the invention is also of use in other networks, such as networks including High Speed Packet Access (HSPA) Femto cells.

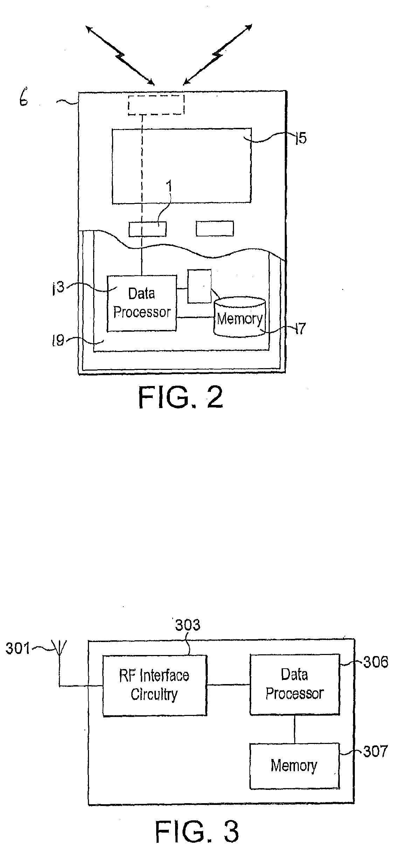

Figure 2 shows a schematic partially sectioned view of an example of user equipment 6 that may be used for communicating with the LTE-A base station 2 and/or a CSG HeNB 4 of Figure 1 via a wireless interface. The user equipment (UE) 6 may be used for various tasks such as making and receiving phone calls, for receiving and sending data from and to a data network and for experiencing, for example, multimedia or other content.

The UE 6 may be any device capable of at least sending or receiving radio signals. Non-limiting examples include a mobile station (MS), a portable computer provided with a wireless interface card or other wireless interface facility, personal data assistant (PDA) provided with wireless communication capabilities, or any combinations of these or the like. The UE 6 may communicate via an appropriate radio interface arrangement of the UE 6. The interface arrangement may be provided for example by means of a radio part and associated antenna arrangement. The antenna arrangement may be arranged internally or externally to the UE 6.

The UE 6 may be provided with at least one data processing entity 13 and at least one memory or data storage entity 17 for use in tasks it is designed to perform. The data processor 13 and memory 17 may be provided on an appropriate circuit board 19 and/or in chipsets.

The user may control the operation of the UE 6 by means of a suitable user interface such as key pad 1, voice commands, touch sensitive screen or pad, combinations thereof or the like. A display 15, a speaker and a microphone may also be provided. Furthermore, the UE 6 may comprise appropriate connectors (either wired or wireless) to other devices and/or for connecting external accessories, for example hands-free equipment, thereto.

Figure 3 shows an example of apparatus for use at either the CSG HeNBs 4 or at the LTE-A base station 2. The apparatus comprises a radio frequency antenna 301 configured to receive and transmit radio frequency signals; radio frequency interface circuitry 303 configured to interface the radio frequency signals received and transmitted by the antenna 301 and the data processor 306. The radio frequency interface circuitry 303 may also be known as a transceiver. The data processor 306 is configured to process signals from the radio frequency interface circuitry 303, control the radio frequency interface circuitry 303 to generate suitable RF signals to communicate information to the UE 6 via the wireless communications link. The memory 307 is used for storing data, parameters and instructions for use by the data processor 306.

It would be appreciated that both the UE 6 and the apparatus shown in figures 2 and 3 respectively and described above may comprise further elements which are not directly involved with the embodiments of the invention described hereafter.

In this embodiment, LTE-A base station 2 is designed to make OFDM (Orthogonal Frequency Division Multiple Access) transmissions on one or more LTE component carriers, which component carriers are made up of groups of orthogonal sub-carriers. Each CSG-HeNB 4 is also designed to make OFDM transmissions on one or more of the one or more LTE component carriers on which the LTE-A base station makes transmissions. Where the LTE-A base station 2 does have the option to make a transmission on an LTE component carrier that is not available to the CSG HeNBs 4 at the edge of the area 8 served by the macro access node 2 (such carrier can be referred to as an "escape carrier"), the inventors have found that it can be advantageous to switch between limiting the transmission power of a CSG HeNB 4 and not limiting the transmission power of a CSG HeNB 4 depending on the density of operating CSG HeNBs 4 in the vicinity of the said CSG-HeNB. In other words, where the density of CSG HeNBs 4 is relatively high, the performance of the LTE-A base station 2 can be improved by limiting the transmission power of the CSG HeNBs 4; on the other hand, where the density of operating CSG HeNBs 4 is relatively low, the performance of both the LTE-A base station 2 and the CSG HeNBs 4 can be improved by not limiting the transmission power of the CSG HeNBs 4. For the case where LTE-A base station 2 does not have the option to make a transmission on an LTE component carrier that is not available to the CSG HeNBs 4 (i.e. there is no escape carrier) it is found that there may be no disadvantage to always limiting the transmission power of a CSG HeNB 4 irrespective of the density of CSG HeNBs.

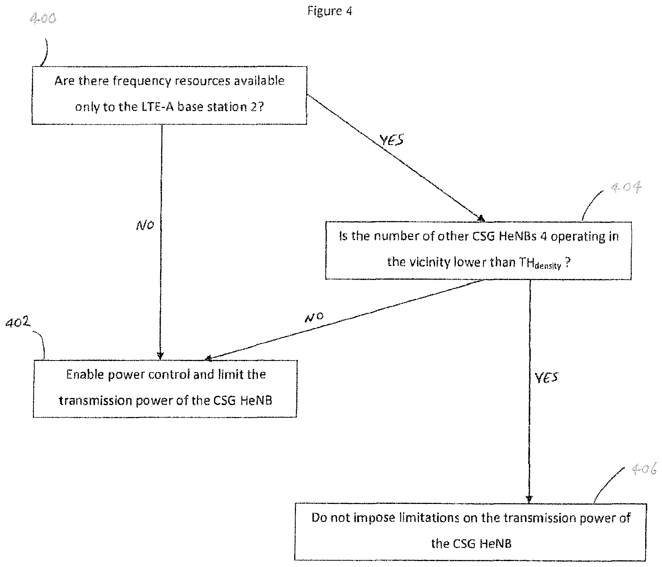

Figure 4 illustrates the operation of a CSG HeNB 4 in accordance with an embodiment of the present invention.

In STEP 400, the CSG HeNB 4 checks if there are frequency resources (e.g. one or more escape carriers) available only to the LTE-A base station 2 (i.e. not to the CSG HeNBs 4) for the protection of the LTE-A base station 2. This check can be made on the basis of information received from a centralised management system servicing a group of CSG HeNBs 4 or obtained autonomously by measurements done either by the HeNB or any UE connected to it.

If the result of the check is negative, the CSG HeNB 4 enables power control and limits the transmission power of the CSG HeNB in accordance with a power control formula (STEP 402).

If the result of the check is positive, the CSG HeNB 4 determines the number of other CSG HeNBs 4 operating in the vicinity (STEP 404). The CSG-HeNB does this by either (a) itself measuring the power at which it detects reference signals from other CSG HeNBs 4 and counting the number of CSG-HeNBs 4 for which the detected reference signal received power (RSRP) exceeds a predetermined threshold power, TH_{power}; or (b) receiving such RSRP measurements from one or more UEs connected to the CSG HeNB and counting the number of CSG-HeNBs 4 for which the RSRP exceeds said predetermined threshold power TH_{power}. The threshold power TH_{power} may be set at the CSG-HeNB 4 or may be a value that is received from a centralised entity that provides operations and maintenance information to a group of CSG HeNBs 4.

If the number of CSG-HeNBs 4 is lower than a certain threshold, TH_{density}, the CSG-HeNB 4 does not impose limitations on its transmission power (STEP 406).

On the other hand, if the number of CSG-HeNBs 4 is not lower than said certain threshold, TH_{density}, the CSG-HeNB 4 limits its transmission power according to a power control formula (STEP 408).

The values of TH_{power} and TH_{density} can be dynamically set by the operator of the heterogeneous network according to any change in the priority that it wishes to give to improving the level of performance of the LTE-A base station.

The above-described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

For example the embodiments of the invention may be implemented as a chipset, in other words a series of integrated circuits communicating among each other. The chipset may comprise microprocessors arranged to run code, application specific integrated circuits (ASICs), or programmable digital signal processors for performing the operations described above.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication. In addition to the modifications explicitly mentioned above, it will be evident to a person skilled in the art that various other modifications of the described embodiment may be made within the scope of the invention.

## Claims

1. A method for use in a system comprising a plurality of first access nodes (4) operating within an area served by a second access node (2), the first access nodes serving areas smaller than the area served by the second access node and sharing at least some frequency resources with the second access node: **characterised in that** the method comprises determining, at one of the first access nodes, the number of other first access nodes for which a reference signal received power detected at said one of the first access nodes exceeds a predetermined threshold, or the number of other first access nodes for which a reference signal received power detected at user equipments connected to said one of the first access nodes and sending reference signal received power measurements to said one of the first access nodes exceeds a predetermined threshold, and determining whether or not to limit the wireless transmission power of said one of the first access nodes based on said determined number.

2. A method according to claim 1, wherein the determining whether or not to limit the wireless transmission power is also based on whether or not the frequency resources available to said second access node include frequency resources not available to said first access nodes.

3. A method according to claim 2, comprising determining at said one of the first access nodes to limit the transmission power of said one of the first access nodes when (i) the frequency resources available to said second access node do include frequency resources not available to said first access nodes, and (ii) said determined number of other first access nodes (4) for which a reference signal received power detected at said one of the first access nodes exceeds a predetermined threshold, or said determined number of other first access nodes for which a reference signal received power detected at user equipments connected to said one of the first access nodes and sending reference signal received power measurements to said one of the first access nodes exceeds a predetermined threshold, is not lower than a predetermined threshold number.

4. A method according to claim 2 or claim 3, comprising determining at said one of the first access nodes not to limit the transmission power of said one of the first access nodes when (i) the frequency resources available to said second access node do include frequency resources not available to said first access nodes, and (ii) said determined number of other first access nodes (4) for which a reference signal received power detected at said one of the first access nodes exceeds a predetermined threshold, or said determined number of other first access nodes for which a reference signal received power detected at user equipments connected to said one of the first access nodes and sending reference signal received power measurements to said one of the first access nodes exceeds a predetermined threshold, is lower than a predetermined threshold number.

5. A method according to claim 3 or claim 4, wherein the predetermined threshold number is dynamically set.

6. A method according to any of claims 1 to 5, wherein said one of the first access nodes is located in an outer portion of said second area.

7. A method according to any preceding claim, wherein the determining whether or not to limit the wireless transmission power is also based on the location of said one of the first access nodes in relation to the second access node.

8. An apparatus for use at one of a plurality of first access nodes (4) operating within an area served by a second access node (2), the first access nodes serving areas smaller than the area served by the second access node and sharing at least some frequency resources with the second access node, **characterised in that** the apparatus comprises: means for determining the number of other first access nodes for which a reference signal received power detected at said one of the first access nodes exceeds a predetermined threshold, or the number of other first access nodes for which a reference signal received power detected at user equipments connected to said one of the first access nodes and sending reference signal received power measurements to said one of the first access nodes exceeds a predetermined threshold; and means for determining whether or not to limit the wireless transmission power of said one of the first access nodes based on said determined number.

9. An apparatus according to claim 8, wherein the determining whether or not to limit the wireless transmission power is based also on whether or not the frequency resources available to said second access node include frequency resources not available to said first access nodes.

10. An apparatus according to claim 9, comprising means for determining at said one of the first access nodes to limit the transmission power of said one of the first access nodes when (i) the frequency resources available to said second access node do include frequency resources not available to said first access nodes, and (ii) said determined number of other first access nodes (4) for which a reference signal received power detected at said one of the first access nodes exceeds a predetermined threshold, or said determined number of other first access nodes for which a reference signal received power detected at user equipments connected to said one of the first access nodes and sending reference signal received power measurements to said one of the first access nodes exceeds a predetermined threshold, is not lower than a predetermined threshold number.

11. An apparatus according to claim 9 or claim 10, comprising means for determining at said one of the first access nodes not to limit the transmission power of said one of the first access nodes when (i) the frequency resources available to said second access node do include frequency resources not available to said first access nodes, and (ii) said determined number of other first access nodes (4) for which a reference signal received power detected at said one of the first access nodes exceeds a predetermined threshold, or said determined number of other first access nodes for which a reference signal received power detected at user equipments connected to said one of the first access nodes and sending reference signal received power measurements to said one of the first access nodes exceeds a predetermined threshold, is lower than a predetermined threshold number.

12. An apparatus according to claim 10 or claim 11, wherein the predetermined threshold number is dynamically set.

13. An apparatus according to any of claims 8 to 12, wherein the determining whether or not to limit the wireless transmission power is based also on the location of said one of the first access nodes in relation to the second access node.

14. A computer program product comprising program code means which when loaded into a computer in a system comprising a plurality of first access nodes (4) operating within an area served by a second access node (2), the first access nodes serving areas smaller than the area served by the second access node and sharing at least some frequency resources with the second access node, controls the computer to: determine, at one of said first access nodes, the number of other first access nodes for which a reference signal received power detected at said one of the first access nodes exceeds a predetermined threshold, or the number of other first access nodes for which a reference signal received power detected at user equipments connected to said one of the first access nodes and sending reference signal received power measurements to said one of the first access nodes exceeds a predetermined threshold, and to determine whether or not to limit the wireless transmission power of said one of the first access node based on said determined number.

15. A system comprising: a first access node and a second access node, and an apparatus according to any of claims 8 to 12 at said first access node.

## Patentansprüche

1. Verfahren zur Verwendung in einem System, das eine Vielzahl von ersten Zugangsknoten (4) umfasst, die innerhalb eines Gebiets operieren, das von einem zweiten Zugangsknoten (2) bedient wird, wobei die ersten Zugangsknoten Gebiete bedienen, die kleiner als das Gebiet sind, das von dem zweiten Zugangsknoten bedient wird, und mindestens einige Frequenzressourcen mit dem zweiten Zugangsknoten teilen: **dadurch gekennzeichnet, dass** das Verfahren Folgendes umfasst: Bestimmen, an einem der ersten Zugangsknoten, der Anzahl anderer erster Zugangsknoten, für die eine an dem einen der ersten Zugangsknoten detektierte Referenzsignalempfangsleistung eine vorbestimmte Schwelle übersteigt, oder die Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, und Bestimmen, ob die drahtlose Sendeleistung des einen der ersten Zugangsknoten auf der Grundlage der bestimmten Anzahl begrenzt werden soll oder nicht.

2. Verfahren nach Anspruch 1, wobei das Bestimmen, ob die drahtlose Sendeleistung begrenzt werden soll oder nicht, auch darauf basiert, ob die für den zweiten Zugangsknoten verfügbaren Frequenzressourcen Frequenzressourcen beinhalten, die nicht für die ersten Zugangsknoten verfügbar sind.

3. Verfahren nach Anspruch 2, das Bestimmen umfasst, an dem einen der ersten Zugangsknoten, die Sendeleistung des einen der ersten Zugangsknoten zu begrenzen, wenn (i) die für den zweiten Zugangsknoten verfügbaren Frequenzressourcen Frequenzressourcen beinhalten, die nicht für die ersten Zugangsknoten verfügbar sind, und (ii) die bestimmte Anzahl anderer erster Zugangsknoten (4), für die eine an dem einen der ersten Zugangsknoten detektierte Referenzsignalempfangsleistung eine vorbestimmte Schwelle übersteigt, oder die bestimmte Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, nicht kleiner als eine vorbestimmte Schwellenanzahl ist.

4. Verfahren nach Anspruch 2 oder Anspruch 3, das Bestimmen umfasst, an dem einen der ersten Zugangsknoten, die Sendeleistung des einen der ersten Zugangsknoten nicht zu begrenzen, wenn (i) die für den zweiten Zugangsknoten verfügbaren Frequenzressourcen Frequenzressourcen beinhalten, die nicht für die ersten Zugangsknoten verfügbar sind, und (ii) die bestimmte Anzahl anderer erster Zugangsknoten (4), für die eine an dem einen der ersten Zugangsknoten detektierte Referenzsignalempfangsleistung eine vorbestimmte Schwelle übersteigt, oder die bestimmte Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, kleiner als eine vorbestimmte Schwellenanzahl ist.

5. Verfahren nach Anspruch 3 oder Anspruch 4, wobei die vorbestimmte Schwellenanzahl dynamisch eingestellt wird.

6. Verfahren nach einem der Ansprüche 1 bis 5, wobei sich der eine der ersten Zugangsknoten in einem Außenbereich des zweiten Gebiets befindet.

7. Verfahren nach einem der vorhergehenden Ansprüche, wobei das Bestimmen, ob die drahtlose Sendeleistung begrenzt werden soll oder nicht, auch auf dem Standort des einen der ersten Zugangsknoten relativ zu dem zweiten Zugangsknoten basiert.

8. Einrichtung zur Verwendung an einem aus einer Vielzahl von ersten Zugangsknoten (4), die innerhalb eines Gebiets operieren, das von einem zweiten Zugangsknoten (2) bedient wird, wobei die ersten Zugangsknoten Gebiete bedienen, die kleiner als das Gebiet sind, das von dem zweiten Zugangsknoten bedient wird, und mindestens einige Frequenzressourcen mit dem zweiten Zugangsknoten teilen, **dadurch gekennzeichnet, dass** die Einrichtung Folgendes umfasst: ein Mittel zum Bestimmen der Anzahl anderer erster Zugangsknoten, für die eine an dem einen der ersten Zugangsknoten detektierte Referenzsignalempfangsleistung eine vorbestimmte Schwelle übersteigt, oder die Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, und ein Mittel zum Bestimmen, ob die drahtlose Sendeleistung des einen der ersten Zugangsknoten auf der Grundlage der bestimmten Anzahl begrenzt werden soll oder nicht.

9. Einrichtung nach Anspruch 8, wobei das Bestimmen, ob die drahtlose Sendeleistung begrenzt werden soll oder nicht, auch darauf basiert, ob die für den zweiten Zugangsknoten, verfügbaren Frequenzressourcen Frequenzressourcen beinhalten, die nicht für die ersten Zugangsknoten verfügbar sind.

10. Einrichtung nach Anspruch 9, die ein Mittel zum Bestimmen umfasst, an dem einen der ersten Zugangsknoten, die Sendeleistung des einen der ersten Zugangsknoten zu begrenzen, wenn (i) die für den zweiten Zugangsknoten verfügbaren Frequenzressourcen Frequenzressourcen beinhalten, die nicht für die ersten Zugangsknoten verfügbar sind, und (ii) die bestimmte Anzahl anderer erster Zugangsknoten (4), für die eine an dem einen der ersten Zugangsknoten detektierte Referenzsignalempfangsleistung eine vorbestimmte Schwelle übersteigt, oder die bestimmte Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, nicht kleiner als eine vorbestimmte Schwellenanzahl ist.

11. Einrichtung nach Anspruch 9 oder Anspruch 10, die ein Mittel zum Bestimmen umfasst, an dem einen der ersten Zugangsknoten, die Sendeleistung des einen der ersten Zugangsknoten nicht zu begrenzen, wenn (i) die für den zweiten Zugangsknoten verfügbaren Frequenzressourcen Frequenzressourcen beinhalten, die nicht für die ersten Zugangsknoten verfügbar sind, und (ii) die bestimmte Anzahl anderer erster Zugangsknoten (4), für die eine an dem einen der ersten Zugangsknoten detektierte Referenzsignalempfangsleistung eine vorbestimmte Schwelle übersteigt, oder die bestimmte Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, kleiner als eine vorbestimmte Schwellenanzahl ist.

12. Einrichtung nach Anspruch 10 oder Anspruch 11, wobei die vorbestimmte Schwellenanzahl dynamisch eingestellt wird.

13. Einrichtung nach einem der Ansprüche 8 bis 12, wobei das Bestimmen, ob die drahtlose Sendeleistung begrenzt werden soll oder nicht, auch auf dem Standort des einen der ersten Zugangsknoten relativ zu dem zweiten Zugangsknoten basiert.

14. Computerprogrammprodukt, das Programmcodemittel umfasst, die, wenn sie in einen Computer in einem System geladen werden, das eine Vielzahl von ersten Zugangsknoten (4) umfasst, die innerhalb eines Gebiets operieren, das von einem zweiten Zugangsknoten (2) bedient wird, wobei die ersten Zugangsknoten Gebiete bedienen, die kleiner als das Gebiet sind, das von dem zweiten Zugangsknoten bedient wird, und mindestens einige Frequenzressourcen mit dem zweiten Zugangsknoten teilen, den Computer ansteuern zum: Bestimmen, an einem der ersten Zugangsknoten, der Anzahl anderer erster Zugangsknoten, für die eine an dem einen der ersten Zugangsknoten detektierte Referenzsignalempfangsleistung eine vorbestimmte Schwelle übersteigt, oder die Anzahl anderer erster Zugangsknoten, für die eine an Benutzergeräten, die mit dem einen der ersten Zugangsknoten verbunden sind und Referenzsignalempfangsleistungsmessungen an den einen der ersten Zugangsknoten senden, detektierte Referenzsignalempfangsleistung eine vorbestimmte Schwelle übersteigt, und Bestimmen, ob die drahtlose Sendeleistung des einen der ersten Zugangsknoten auf der Grundlage der bestimmten Anzahl begrenzt werden soll oder nicht.

15. System das Folgendes umfasst: einen ersten Zugangsknoten und einen zweiten Zugangsknoten und eine Einrichtung nach einem der Ansprüche 8 bis 12 an dem ersten Zugangsknoten.

## Revendications

1. Un procédé destiné à une utilisation dans un système comprenant une pluralité de premiers noeuds d'accès (4) fonctionnant à l'intérieur d'une zone desservie par un deuxième noeud d'accès (2), les premiers noeuds d'accès desservant des zones plus petites que la zone desservie par le deuxième noeud d'accès et partageant au moins quelques ressources de fréquence avec le deuxième noeud d'accès : **caractérisé en ce que** le procédé comprend la détermination, au niveau d'un des premiers noeuds d'accès, du nombre d'autres premiers noeuds d'accès pour lesquels une puissance reçue de signal de référence détectée au niveau dudit un des premiers noeuds d'accès dépasse un seuil prédéterminé, ou le nombre d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, et la détermination si ou non il convient de limiter la puissance de transmission sans fil dudit un des premiers noeuds d'accès en fonction dudit nombre déterminé.

2. Un procédé selon la revendication 1, dans lequel la détermination si ou non il convient de limiter la puissance de transmission sans fil est également fonction de si ou non les ressources de fréquence à la disposition dudit deuxième noeud d'accès comprennent des ressources de fréquence qui ne sont pas à la disposition desdits premiers noeuds d'accès.

3. Un procédé selon la revendication 2, comprenant la détermination au niveau dudit un des premiers noeuds d'accès de limiter la puissance de transmission dudit un des premiers noeuds d'accès lorsque (i) les ressources de fréquence à la disposition dudit deuxième noeud d'accès comprennent des ressources de fréquence qui ne sont pas à la disposition desdits premiers noeuds d'accès, et (ii) ledit nombre déterminé d'autres premiers noeuds d'accès (4) pour lesquels une puissance reçue de signal de référence détectée au niveau dudit un des premiers noeuds d'accès dépasse un seuil prédéterminé, ou ledit nombre déterminé d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, n'est pas inférieur à un nombre seuil prédéterminé.

4. Un procédé selon la revendication 2 ou 3, comprenant la détermination au niveau dudit un des premiers noeuds d'accès de ne pas limiter la puissance de transmission dudit un des premiers noeuds d'accès lorsque (i) les ressources de fréquence à la disposition dudit deuxième noeud d'accès comprennent des ressources de fréquence qui ne sont pas à la disposition desdits premiers noeuds d'accès, et (ii) ledit nombre déterminé d'autres premiers noeuds d'accès (4) pour lesquels une puissance reçue de signal de référence détectée au niveau dudit un des premiers noeuds d'accès dépasse un seuil prédéterminé, ou ledit nombre déterminé d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, est inférieur à un nombre seuil prédéterminé.

5. Un procédé selon la revendication 3 ou 4, dans lequel le nombre seuil prédéterminé est défini de manière dynamique.

6. Un procédé selon l'une quelconque des revendications 1 à 5, dans lequel ledit un des premiers noeuds d'accès se situe dans une partie extérieure de ladite deuxième zone.

7. Un procédé selon l'une quelconque des revendications précédentes, dans lequel la détermination si ou non il convient de limiter la puissance de transmission sans fil est également basée sur l'emplacement dudit un des premiers noeuds d'accès en relation avec le deuxième noeud d'accès.

8. Un appareil destiné à une utilisation au niveau d'un noeud d'une pluralité de premiers noeuds d'accès (4) fonctionnant à l'intérieur d'une zone desservie par un deuxième noeud d'accès (2), les premiers noeuds d'accès desservant des zones plus petites que la zone desservie par le deuxième noeud d'accès et partageant au moins quelques ressources de fréquence avec le deuxième noeud d'accès, **caractérisé en ce que** l'appareil comprend : un moyen de détermination du nombre d'autres premiers noeuds d'accès pour lesquels une puissance reçue de signal de référence détectée au niveau dudit un des premiers noeuds d'accès dépasse un seuil prédéterminé, ou le nombre d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, et un moyen de détermination si ou non il convient de limiter la puissance de transmission sans fil dudit un des premiers noeuds d'accès en fonction dudit nombre déterminé.

9. Un appareil selon la revendication 8, dans lequel la détermination si ou non il convient de limiter la puissance de transmission sans fil est également fonction de si ou non les ressources de fréquence à la disposition dudit deuxième noeud d'accès comprennent des ressources de fréquence qui ne sont pas à la disposition desdits premiers noeuds d'accès.

10. Un appareil selon la revendication 9, comprenant un moyen de détermination au niveau dudit un des premiers noeuds d'accès de limiter la puissance de transmission dudit un des premiers noeuds d'accès lorsque (i) les ressources de fréquence à la disposition dudit deuxième noeud d'accès comprennent des ressources de fréquence qui ne sont pas à la disposition desdits premiers noeuds d'accès, et (ii) ledit nombre déterminé d'autres premiers noeuds d'accès (4) pour lesquels une puissance reçue de signal de référence détectée au niveau dudit un des premiers noeuds d'accès dépasse un seuil prédéterminé, ou ledit nombre déterminé d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, n'est pas inférieur à un nombre seuil prédéterminé.

11. Un appareil selon la revendication 9 ou 10, comprenant un moyen de détermination au niveau dudit un des premiers noeuds d'accès de ne pas limiter la puissance de transmission dudit un des premiers noeuds d'accès lorsque (i) les ressources de fréquence à la disposition dudit deuxième noeud d'accès comprennent des ressources de fréquence qui ne sont pas à la disposition desdits premiers noeuds d'accès, et (ii) ledit nombre déterminé d'autres premiers noeuds d'accès (4) pour lesquels une puissance reçue de signal de référence détectée au niveau dudit un des premiers noeuds d'accès dépasse un seuil prédéterminé, ou ledit nombre déterminé d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, est inférieur à un nombre seuil prédéterminé.

12. Un appareil selon la revendication 10 ou 11, dans lequel le nombre seuil prédéterminé est défini de manière dynamique.

13. Un appareil selon l'une quelconque des revendications 8 à 12, dans lequel la détermination si ou non il convient de limiter la puissance de transmission sans fil est également basée sur l'emplacement dudit un des premiers noeuds d'accès en relation avec le deuxième noeud d'accès.

14. Un produit de programme informatique contenant un moyen de code de programme qui, lorsqu'il est chargé dans un ordinateur dans un système comprenant une pluralité de premiers noeuds d'accès (4) fonctionnant à l'intérieur d'une zone desservie par un deuxième noeud d'accès (2), les premiers noeuds d'accès desservant des zones plus petites que la zone desservie par le deuxième noeud d'accès et partageant au moins quelques ressources de fréquence avec le deuxième noeud d'accès, commande l'ordinateur de façon à : déterminer, au niveau d'un desdits premiers noeuds d'accès, le nombre d'autres premiers noeuds d'accès pour lesquels une puissance reçue de signal de référence détectée au niveau dudit un des premiers noeuds d'accès dépasse un seuil prédéterminé, ou le nombre d'autres premiers noeuds d'accès pour lesquels une puissance reçue de signal de référence détectée au niveau d'équipements d'utilisateur raccordés audit un des premiers noeuds d'accès et envoyant des mesures de puissance reçue de signal de référence audit un des premiers noeuds d'accès dépasse un seuil prédéterminé, et déterminer si ou non il convient de limiter la puissance de transmission sans fil dudit un des premiers noeuds d'accès en fonction dudit nombre déterminé.

15. Un système comprenant : un premier noeud d'accès et un deuxième noeud d'accès, et un appareil selon l'une quelconque des revendications 8 à 12 au niveau dudit premier noeud d'accès.
